# EUROPEAN PATENT APPLICATION

(11) **EP 2 289 377 A1**
(43) Date of publication of application: **02.03.2011**
(21) Application number: 09168692.3
(22) Date of filing: 26.08.2009
(51) Int. Cl.: A47J 31/44

(54) **Drip-style coffee maker**

(71) Applicant: Rebecca Lin International Corp., Taichung, Taiwan (CN)
(72) Inventor: Lin, Hsueh-Yu, Taichung, Taiwan (CN)
(74) Representative: Viering, Hans-Martin

(57) **Abstract**

A drip-style coffee maker includes a stand (10), a frame (12) projected from the stand (10) and a brewing device (14) on the frame (12). The brewing device (14) includes a hot water pipe (16) having a spout (50), a brewing container (18) under the spout (50) of the hot water pipe (16), and a spray member (26) connected to the spout (50) of the hot water pipe (16). The spray member (26) has a bottom plate (42) and a plurality of apertures (60) distributed on the bottom plate (42). A diameter of the spray member (26) is equal to or greater than 45% of a maximum diameter of the brewing container (18) that coffee grounds (22) received in the brewing container (18) maybe brewed in a consistent brewing condition.

## Description

### BACKGROUND OF THE INVENTION

### 1. Field of the Invention

The present invention relates generally to a coffee maker, and more particularly to a drip-style coffee maker which brews coffee of good flavor and consistent quality.

### 2. Description of the Related Art

Drip-style coffee maker is a popular coffee making device which is easy to operate and brews coffee of good quality and flavor.

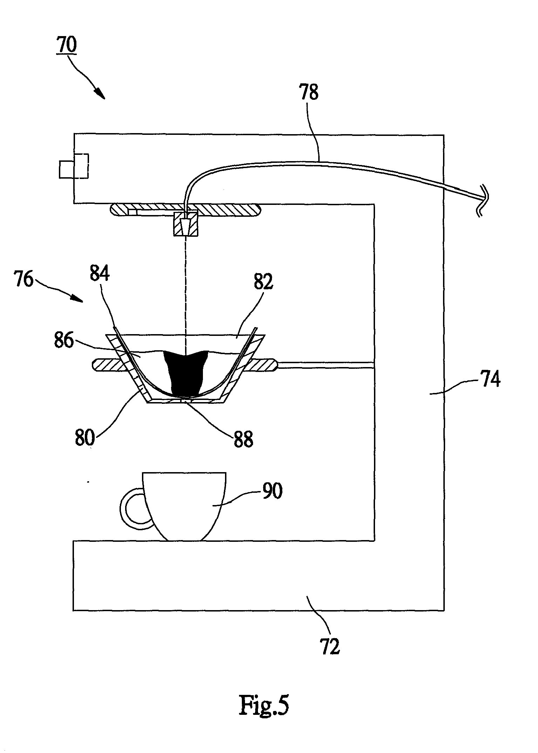

Fig. 5 shows a conventional drip-style coffee maker 70. It includes a base 72, which has an extended frame 74, and a brewing device 76 on its top. The brewing device 76 has a hot water pipe 78, and a container 80 which has a brewing chamber 82. The brewing chamber 82 is provided with filter paper 84. Coffee grounds 86 is filled up into the brewing chamber 82. When hot water flows through water pipe 78 into the brewing chamber 82, it is mixed with the coffee grounds 86, filtered by filter paper 84, and then flows out from an spout 88 at the button of the container 80, and finally into a coffee cup 90 on the base 72.

Coffee brewed using the above mentioned coffee maker will sometimes makes coffee that tastes bitter. We believe the reasons are as following:

When hot water flows from water pipe into brewing chamber, hot water will soak coffee grounds right under it first, and then spread out. Under this condition, coffee grounds right under the pipe will be overly soaked, and therefore produces bitter flavor.

### SUMMARY OF THE INVENTION

This primary objective of the present invention is to provide a drip-style coffee maker which will make coffee grounds soaked evenly.

According to the objective of the present invention, a drip-style coffee maker includes a base and a brewing device which is connected to it. The brewing device includes a hot water pipe that has a spout, a container located under the pipe, and a spraying member which has a spraying room, a plate on the base, and some apertures on it. The spout of the pipe is connected to the spraying member, and further connected to the spraying room. The spraying member has a bigger surface than the pipe. It allows hot water to sprinkle evenly onto coffee grounds and makes coffee grounds soaked to the same extent.

### BRIEF DESCRIPTION OF THE DRAWINGS

FIG. 1 is a right view of a preferred embodiment of the present invention;
FIG 2 is an exploded view of the spray member of the preferred embodiment of the present invention;
FIG. 3 is a sectional view in parts of the preferred embodiment of the present invention;
FIG. 4 is an enlarged view of FIG. 3; and
FIG. 5 is a perspective view of the conventional coffee maker.

### DETAILED DESCRIPTION OF THE INVENTION

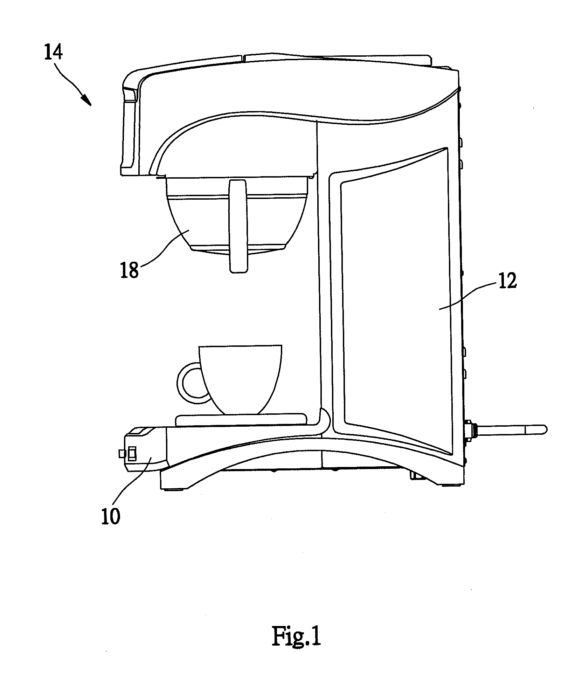

As shown in FIG. 1 to FIG. 4, a drip-style coffee maker of the preferred embodiment of the present invention includes a stand 10, a frame 12 projected from a top of the stand 10, and a brewing device 14 on the frame 12. The brewing device 14 is provided with a water reservoir (not shown) therein, a heater (not shown), a hot water pipe 16, and a brewing container 18. A filter 20 may be put in the brewing container 18, and coffee grounds 22 are filled in the filter 20. The above devices are the same as the conventional drip-style coffee maker, and we will not describe the details here.

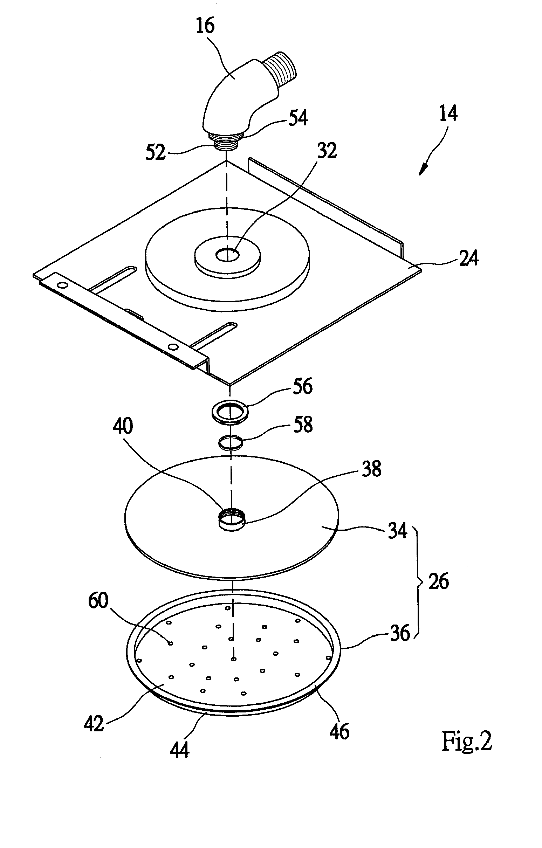

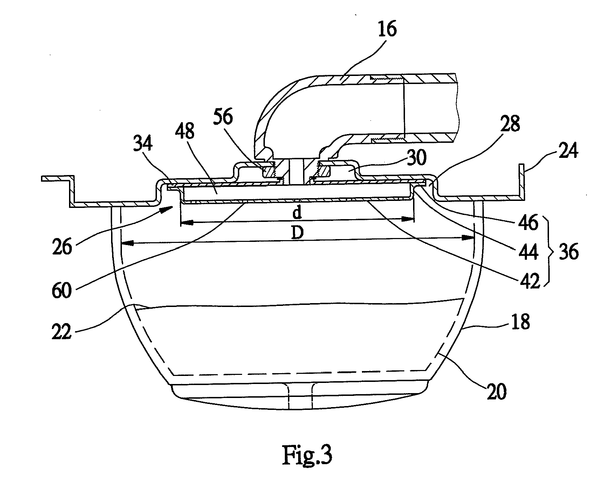

As shown in FIG. 2 and FIG. 3, the brewing device 14 further includes a base 24 and a spray member 26.

The base 24 is a plate with a two-staged round protrusion and a first space 28 and a second space 30 are formed under the base 24. The first space 28 has a greater volume, and the second space 30 is at a center of a bottom of the first space. The base 24 has an opening 32 communicated with the second space 30.

The spray member 26 includes a lid 34 and a sprayer 36. The lid 34 is a disk having a tube 38 at a center with a threaded opening 40 therein. The sprayer 36 has a flat bottom plate 42, an annular wall 44 projected upwards from an edge of the bottom plate 42, and an annular flange on a top of the wall 44. On the bottom plate 42 there is a plurality of apertures 60. The lid 34 is put on the sprayer 36 touching the flange 46. The lid 34 is fixed with the sprayer 36 by a suitable way, such as by adhering, welding, and riveting, so that a sealed chamber 48 is formed therein.

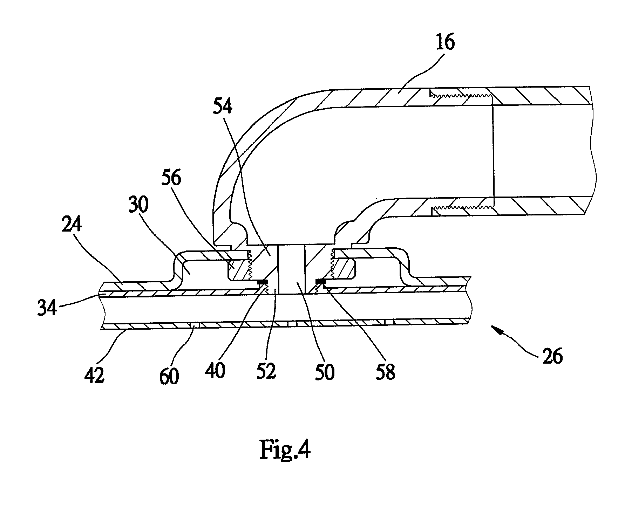

As shown in FIG. 4, the hot water pipe 16 has a spout 50 at an end thereof and a two-staged portion at the end, named a first coupling portion 52 and a second coupling portion 54. The first coupling portion 52 is adjacent to the spout 50 and has a smaller diameter, and the second coupling portion 54 is behind the first coupling portion 52 and has a greater diameter. On the outer sides of the first and second portions 52 and 54 there are threads. The spout 50 of the hot water pipe 16 is inserted through the opening 32 of the base 24 into the second space 30, and then a nut 56 is screwed onto the second coupling portion 54 to fix the hot water pipe 16 with the base 24. Next, the first coupling portion 52 is screwed into the threaded opening 40 of the lid 34 of the spray member 28 that the sprayer 36, the lid 34, the base 24 and the hot water pipe 16 are fixed together. Under such condition, the nut 56 is in the second space 30, and the spray member 28 is in the first space 28. At last, the base 24 is connected to the brewing container 18 to have the spray member 24 above the brewing container 18.

Hot water flows into the chamber 48 of the spray member 26 from the spout 50 of the hot water pipe 16 and sprays out via the apertures 60 on the bottom plate 42 to sprinkle hot water on the coffee grounds 22 evenly and brew the coffee grounds 22 in a consistent condition.

Typically, a bigger spray member 36 is better. However, a typical brewing container 18 has a maximum diameter D in a range between 9 cm and 25 cm. A preferred diameter d of the spray member 28 for fitting such brewing container 18 is in a range between 5 cm and 15 cm. A preferred condition is that the maximum diameter D of the brewing container 18 is 18 cm and the diameter d of the spray member 28 is 10 cm. In conclusion, the diameter d of the spray member 28 should be no less than 45% of the maximum diameter D of the brewing container 18

In a preferred embodiment, the bottom plate 42 of the spray member 28 is flat and diameters of the apertures 60 is between 1 mm and 3 mm. Apertures which are too big may cause an overly rapid speed of hot water, while apertures which are too small may lead to a difficulty for hot water to come out. The apertures 60 have a identical distribution on the bottom plate 42 that hot water in the chamber 48 may evenly sprinkle on the coffee grounds 22 to have a consistent brewing condition of all coffee grounds 22.

In another preferred embodiment, the typical brewing container 18 is a bowl-like member. In consideration of a vertical direction in which hot water sprinkles, coffee grounds 22 has a deepest depth at a center of the brewing container 18 and the depth is gradually reduced from the center to a circumference thereof. In other words, it has more coffee grounds 22 at the center of the brewing container 18 and less more coffee grounds 22 at a margin of the brewing container 18. To meet such condition, the distribution of the apertures 60 on the bottom plate 42 is not the same. The density of the apertures 60 is greater at a center of the bottom plate 42 and is gradually reduced from the center to an edge thereof.

In conclusion, the present invention provides a drip-style coffee maker which may sprinkle hot water onto a greater area to brew the coffee grounds 22 in a consistent condition.

## Claims

1. A drip-style coffee maker comprising a stand (10) and a brewing device (14) on the stand (10), wherein the brewing device (14) includes:
a hot water pipe (16) having a spout (50);
a brewing container (18) under the spout (50) of the hot water pipe (16); and
a spray member (26), which has a chamber (48) therein and a bottom plate (42) with a plurality of apertures (60), connected to the hot water pipe (16) that the spout (50) of the hot water pipe (16) is connected to the chamber (48) of the spray member (26);
wherein the brewing container (18) has a maximum diameter (D), and the spray member (26) has a diameter (d) that is equal to or greater than 45% of the maximum diameter (D) of the brewing container (18).

2. The drip-style coffee maker as defined in claim 1, wherein the spray member (26) has a sprayer (36), which has the bottom plate (42), and an annular wall 44 projected from the bottom plate (42) and a flange (46) on a top of the wall (44), and a lid (34) connected to the flange (46) of the sprayer (36).

3. The drip-style coffee maker as defined in claim 2, wherein the lid (34) has a threaded opening (40), and the hot water pipe (16) has a first coupling portion (52) with a thread thereon to be screwed into with threaded opening (40) of the lid (34).

4. The drip-style coffee maker as defined in claim 1, wherein the brewing device (14) further includes a base (24), which has a first space (28) to receive the spray member (26) therein, fixed to the brewing container (18).

5. The drip-style coffee maker as defined in claim 4, wherein the base (24) has an opening (32) for the hot water pipe (16) passing through, and the hot water pipe (16) has a thread for a nut (56) screwed thereon to fix the hot water pipe (16) to the base (24).

6. The drip-style coffee maker as defined in claim 5, wherein the base (24) has a second space (30) at a bottom of the first space (28) to receive the nut (56) therein.

7. The drip-style coffee maker as defined in claim 5, wherein the hot water pipe (16) has a first coupling portion (52) and a second coupling portion (54), which has a diameter greater than that of the first coupling portion (52), and the first coupling portion (52) is coupled with the spray member (26) and the second coupling portion (54 is coupled with the nut (56).

8. The drip-style coffee maker as defined in claim 1, wherein the bottom plate (42) of the spray member (26) is flat.

9. The drip-style coffee maker as defined in claim 1, wherein diameters of the apertures (60) on the bottom plate (42) of the spray member (26) are in a range between 1 mm and 3 mm.

10. The drip-style coffee maker as defined in claim 1, wherein the apertures (60) are evenly distributed on the bottom plate (42) of the spray member (26).

11. The drip-style coffee maker as defined in claim 1, wherein a density of the apertures (60) is greater at a center of the bottom plate (42) and is reduced from the center to an edge of the bottom plate (42).
